(19) Europäisches Patentamt
European Patent Office
Office européen des brevets

(11) EP 4 223 522 A1

(12) EUROPEAN PATENT APPLICATION
published in accordance with Art. 153(4) EPC

(43) Date of publication:
**09.08.2023 Bulletin 2023/32**

(21) Application number: **21875348.1**

(22) Date of filing: **22.09.2021**

(51) International Patent Classification (IPC):
***B32B 27/36*** *(2006.01)* ***B65D 25/20*** *(2006.01)*
***G09F 3/04*** *(2006.01)* ***C08J 5/18*** *(2006.01)*

(52) Cooperative Patent Classification (CPC):
**B32B 27/36; B65D 25/20; C08J 5/18; G09F 3/04**

(86) International application number:
**PCT/JP2021/034742**

(87) International publication number:
**WO 2022/071046 (07.04.2022 Gazette 2022/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **01.10.2020 JP 2020167141**

(71) Applicant: **TOYOBO CO., LTD.**
**Osaka-shi**
**Osaka 5300001 (JP)**

(72) Inventors:
- **HARUTA, Masayuki**
  **Tsuruga-shi, Fukui 914-8550 (JP)**
- **TABOTA, Norimi**
  **Osaka-shi, Osaka 530-0001 (JP)**

(74) Representative: **Vossius & Partner Patentanwälte Rechtsanwälte mbB**
**Siebertstraße 3**
**81675 München (DE)**

(54) **HEAT-SHRINKABLE POLYESTER FILM**

(57) [Problem] To provide a heat-shrinkable polyester film having a high heat shrinkage rate in the width direction as the main shrinkage direction, and surface protrusions controlled within a certain range, so that a film roll with transparency, printability, and good appearance can be obtained.

[Solution] A heat-shrinkable polyester film characterized by satisfying the following requirements (1) to (5): (1) a hot-water heat shrinkage rate in a width direction of the film is 40% or more and 80% or less by immersing the film in hot-water at 90°C for 10 seconds; (2) a hot-water heat shrinkage rate in a longitudinal direction of the film is -5% or more and 10% or less by immersing the film in hot-water at 90°C for 10 seconds; (3) a maximum peak height Sp on at least one surface of the film is 0.8 μm or more and 3.0 μm or less; (4) an arithmetical mean height Sa on at least one surface of the film is 0.03 μm or more and 0.2 μm or less, and; (5) a degassing time for removing air from between the two identical polyester films is 14 seconds or less, wherein the films are formed by stacking a front surface of the one film on a back surface of the other film.

[Fig. 1]
8
3
2a
2d
5
A
2
3
8
2
2
4
B
1
X
2a
1
2c
7
6

EP 4 223 522 A1

**Description**

TECHNICAL FIELD

The present invention relates to a heat-shrinkable polyester film, specifically to a heat-shrinkable polyester film having transparency, less wrinkles in the form of a roll, and suitability for processing such as printing. Also, the present invention relates to a heat-shrinkable label and a packaging product.

BACKGROUND ART

In recent years, polyester-based heat-shrinkable films, which are highly heat resistant, easily incinerated, and highly resistant to solvents, have been widely used as shrinkable labels for the purposes of label packaging for protection and displaying product information on glass or plastic bottles, cap sealing, and integrated packaging. With a growing use of containers such as PET (polyethylene terephthalate) bottles, the demand for polyester-based heat-shrinkable film has been on the rise.

So far, thick heat-shrinkable films have been used for labels to cover PET bottles. However, heat-shrinkable films used for a packaging purpose are simply discarded after the use of the contents. In response to growing environmental awareness to reduce waste, film manufacturers have been trying to reduce the thickness of labels by reducing the thickness of heat-shrinkable polyester films.

However, the present inventors have found that, reduction in film thickness caused a decrease in film stiffness, air was easily trapped in the film during winding of film into a roll, and the removal of air from the film became difficult, causing defects such as wrinkles in the rolled film.

CITATION LIST

PATENT LITERATURE

[PTL 1] JP-B1-5240387
[PTL 2] JP-A- 2020-117700

SUMMARY OF THE INVENTION

PROBLEMS TO BE SOLVED BY THE INVENTION

Heat-shrinkable films in common use are produced through uniaxial stretch and have high tensile strength at break in the main shrinkage direction, which is the stretching direction of the film, and low tensile strength at break in the non-shrinkage direction, which is the direction orthogonal to the main shrinkage direction. In PTL 1, the tensile strength at break in both of the longitudinal and width directions of heat-shrinkable polyester film was increased by biaxially stretching, and a film having high film strength was produced. Compared to a method commonly used for producing a heat-shrinkable film, however, the method for producing the film in PTL1 is extremely complicated, and the complexity leads to problems such as need for larger facility and high initial investment.

In PTL 2, the irregularity on the surface of and the content of inorganic particles in a biaxially stretched polyester film are specified. The invention disclosed in PTL 2 relates to a crystalline biaxially stretched polyester film, and the film is different from a heat-shrinkable polyester film produced from amorphous raw materials through uniaxially stretching alone, in irregularity due to surface protrusions and state of air removal in the form of a film roll.

It is an object of the present invention to provide a heat-shrinkable polyester film with good air removal, excellent winding quality, reduced occurrence of wrinkles, and high printability, even with a thickness of 15 to 50 μm.

SOLUTION TO THE PROBLEMS

The present invention, that solves above problems, has the following features.

1. A heat-shrinkable polyester film characterized by satisfying the following requirements (1) to (5):

(1) a hot-water heat shrinkage rate in a width direction of the film is 40% or more and 80% or less by immersing the film in hot-water at 90°C for 10 seconds,

(2) a hot-water heat shrinkage rate in a longitudinal direction of the film is -5% or more and 10% or less by immersing the film in hot-water at 90°C for 10 seconds,
(3) a maximum peak height Sp on at least one surface of the film is 0.8 μm or more and 3.0 μm or less,
(4) an arithmetical mean height Sa on at least one surface of the film is 0.03 μm or more and 0.2 μm or less, and
(5) a degassing time for removing air from between the two identical polyester films is 14 seconds or less, wherein the films are formed by stacking a front surface of the one film on a back surface of the other film.

2. The heat-shrinkable polyester film according to 1, wherein a thickness of the film is 15 μm or more and 50 μm or less.
3. The heat-shrinkable polyester film according to 1 or 2, wherein a haze at a film thickness of 30 μm is 2% or more and 11% or less.
4. The heat-shrinkable polyester film according to any one of 1 to 3, wherein the heat-shrinkable polyester film is a laminated heat-shrinkable polyester film comprising at least two or more laminated layers.
5. A heat-shrinkable label, comprising the heat-shrinkable polyester film according to any one of 1 to 4.
6. A package product, characterized in that the package product is produced by covering at least a part of periphery of an object for packaging with the heat-shrinkable label according to 5, and then shrinking the heat-shrinkable label by heat.

ADVANTAGEOUS EFFECTS OF THE INVENTION

The heat-shrinkable polyester film of the present invention maintains transparency and printability by controlling surface irregularity and air removal within a certain range, and even with a reduced film thickness, the film can maintain improved wrinkle resistance and printability when wound into a roll.

BRIEF DESCRIPTION OF THE DRAWINGS

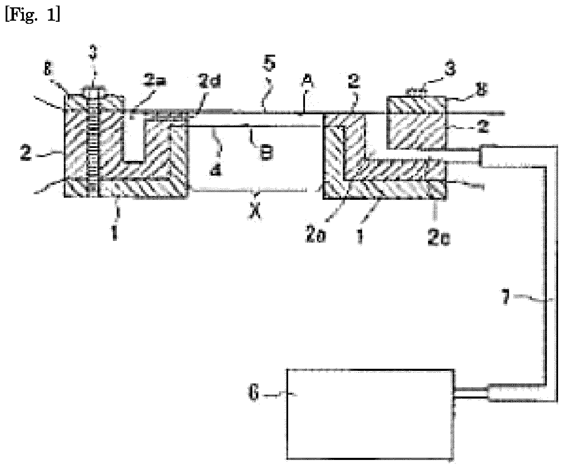

[Figure. 1] Fig. 1 is a schematic diagram illustrating a measurement method for a degassing time of the present invention.

DESCRIPTION OF EMBODIMENTS

Hereinafter, the heat-shrinkable polyester film of the present invention will be described in detail. The method for producing the heat-shrinkable polyester film will be described later. Normally, a heat-shrinkable polyester film is obtained through conveyance and stretching of film with rolls. In film production, the conveyance direction (direction of film forming) of film denotes a longitudinal direction, and the direction orthogonal to the longitudinal direction denotes a width direction of film.
The heat-shrinkable polyester film of the present invention is a heat-shrinkable polyester film satisfying the following requirements (1) to (5).

(1) a hot-water heat shrinkage rate in a width direction of the film is 40% or more and 80% or less by immersing the film in hot-water at 90°C for 10 seconds,
(2) a hot-water heat shrinkage rate in a longitudinal direction of the film is -5% or more and 10% or less by immersing the film in hot-water at 90°C for 10 seconds,
(3) a maximum peak height Sp on at least one surface of the film is 0.8 μm or more and 3 μm or less,
(4) an arithmetical mean height Sa on at least one surface of the film is 0.03 μm or more and 0.2 μm or less, and
(5) a degassing time for removing air from between the two identical polyester films is 14 seconds or less, wherein the films are formed by stacking a front surface of the one film on a back surface of the other film.

Polyester for the heat-shrinkable polyester film of the present invention comprises ethylene terephthalate unit as a main constituent component. The amount of ethylene terephthalate unit is preferably 50 mol% or more, more preferably 60 mol% or more, and further preferably 70 mol% or more in 100 mol% of constituent units of the polyester.
Examples of other dicarboxylic acid components constituting the polyester for the present invention include aromatic dicarboxylic acids such as isophthalic acid, orthophthalic acid, and 2,6-naphthalenedicarboxylic acid; aliphatic dicarboxylic acids such as adipic acid, azelaic acid, sebacic acid, and decanedicarboxylic acid; and alicyclic dicarboxylic acids such as 1,4-cyclohexanedicarboxylic acid.
The polyester is preferably free from a trivalent or higher polyvalent carboxylic acid, such as trimellitic acid and pyromellitic acid, and anhydride thereof. A heat-shrinkable polyester film obtained from polyester containing such a polyvalent carboxylic acid may not attain required high shrinkage.
In addition to ethylene glycol, examples of diol components constituting the polyester include aliphatic diols such as 1,3-propanediol, 2,2-diethyl-1,3-propanediol, 2-n-butyl-2-ethyl-1,3-propanediol, 2,2-isopropyl-1,3-propanediol, 2,2-di-n-butyl-1,3-propanediol, 1,4-butanediol, hexanediol, neopentylglycol, and hexanediol; alicyclic diols such as 1,4-cyclohexanedimethanol; and aromatic diols such as bisphenol A.

Among them, cyclic diols such as 1,4-cyclohexanedimethanol, or diols with carbon number of 3 to 6, such as 1,3-propanediol, 1,4-butanediol, neopentylglycol, hexanediol, are preferable. Particularly, the use of 1,4-butanediol and neopentylglycol will enable polyester satisfying essential requirements of the present invention to be obtained.

The polyester contains an amorphous component, and the total amount of the amorphous component is 17 mol% or more, preferably 18 mol% or more, more preferably 19 mol% or more, and particularly preferably 20 mol% or more in 100 mol% of polyol component and 100 mol% of polycarboxylic acid component (totally in 200 mol%) in the entire polyester resin. Among the monomer components, examples of monomers that can become amorphous components include neopentylglycol, 1,4-cyclohexanedimethanol, isophthalic acid, 1,4-cyclohexanedicarboxylic acid, 2,6-naphthalenedicarboxylic acid, 2,2-diethyl-1,3-propanediol, 2-n-butyl-2-ethyl-1,3-propanediol, 2,2-isopropyl-1,3-propanediol, 2,2-di-n-butyl-1,3-propanediol, and hexanediol. The upper limit of the total amount of amorphous component is not particularly limited, and the amount is preferably 30 mol% or less. Controlling of the amount of amorphous component within the range allows the polyester to have glass transition point (Tg) adjusted from 60 to 80°C.

The polyester is preferably free from diols with carbon number of 8 or higher such as octanediol, or a trivalent or higher polyols, such as trimethylolpropane, trimethylolethane, glycerin, and diglycerol. A heat-shrinkable polyester film obtained from a polyester containing such a diol or a polyol may not attain required high shrinkage rate. The polyester contains diethylene glycol, triethylene glycol, and polyethylene glycol preferably as little as possible.

The resin forming the heat-shrinkable polyester film of the present invention may contain additives such as waxes, antioxidants, antistatic agents, crystal nucleating agents, viscosity reducing agents, heat stabilizers, coloring pigments, color inhibitor, or ultraviolet absorbers, if needed.

In the resins for forming the heat-shrinkable polyester film of the present invention, fine particles may be preferably added, so that a maximum peak height Sp and an arithmetical mean height Sa on at least one surface of the film, and a degassing time for removing air from between front and back surfaces of films are controlled within predetermined ranges. Any type of fine particles may be selected and added, and the examples of the fine particles include inorganic fine particles such as silica, alumina, titanium dioxide, calcium carbonate, kaolin, and barium sulfate, and organic fine particles such as acrylic resin particles, melamine resin particles, silicone resin particles, and cross-linked polystyrene particles. The average particle size of the fine particles is within the range of 1.0 to 5.0 μm by a measurement with a coulter counter, and the size of the fine particles can be selected, if needed, preferably from the range of 2.0 to 5.0 μm. The shape of the fine particles may be spherical or indefinite, however, the film produced with fine particles of spherical shape will have larger number of protrusions on film surface than the case of fine particles with indefinite shape. However, fine particles of spherical shape are generally more expensive than those of indefinite shape, so the use of the fine particles should be preferably determined according to purposes. The amount of the fine particles added in the front and back layers of the heat-shrinkable polyester film is preferably 350 ppm or more and 20000 ppm or less. The amount of the fine particles of less than 350 ppm will cause low maximum peak height Sp and arithmetical mean height Sa on film surface, undesirably leading to a degassing time being out of a predefined range. The amount of the fine particles of more than 20000 ppm will enable the film to have reduced degassing time, however, the maximum peak height Sp and the arithmetical mean height Sa will be high, thereby undesirably causing deterioration in transparency and printability. The amount is more preferably 450 ppm or more and 19000 ppm or less, and particularly preferably 550 ppm or more and 18000 ppm or less.

A combination of preferred fine particles described-above and preferred production method described later enables the formation of surface protrusions suitable for the present invention, thereby allowing the maximum peak height Sp, the arithmetical mean height Sa, and the degassing time to be controlled within predetermined ranges.

The fine particles may be preferably added in a resin forming the heat-shrinkable polyester-based film, for example, by a method involving the addition of the particles in any step of polyester resin production. The fine particles may be added preferably in the form of a slurry dispersed in ethylene glycol in the step of esterification, or after the finish of transesterification and before the start of polycondensation, to proceed polycondensation reaction. In other methods, the fine particles may be preferably blended with polyester resin raw materials in the form of a slurry dispersed in ethylene glycol or water using a vented kneading extruder, or dried fine particles may be preferably blended with polyester resin raw materials using a kneading extruder.

The heat-shrinkable polyester film of the present invention may be subjected to corona treatment, coating treatment, or flame treatment to enhance adhesiveness of the surface of the film.

The heat-shrinkable polyester film of the present invention may be a laminated-type polyester film comprising at least one polyester resin layer. In case where two or more of polyester resin layers are laminated, each polyester resin layer may have the same or different composition of polyester. The layers which can be laminated as other layers are not particularly limited as far as the layers are thermoplastic resin layers, and a polystyrene resin layer is preferable from cost and heat-shrinking properties.

In case where the laminate consists of only two or more polyester resin layers, polyester resin layers containing fine particles are required to be laminated as back and front layers of film. Since the front and back layers are stacking with each other in the form of a film roll, controlling of maximum peak height Sp and arithmetical mean height Sa on film surfaces within predetermined ranges can prevent wrinkles on a film roll. The layer structures may be a 1 type-2 layer structure, a 2 type-3 layer structure, a 3 type-3 layer structure, or a 3 type-5 layer structure, and the 2 type-3 layer structure is suitable for avoiding enlargement of equipment, and also for controlling of protrusions and transparency of the film. In the 2 type-3 layer structure, each layer may be preferably laminated in the order of 'polyester resin layer containing fine particles/polyester resin layer free from fine particles/polyester resin layer containing fine particles'. By laminating the polyester resin layer containing fine particles as the front layer similarly as the back layer, advantageously, protrusions on the two surface layers can be controlled to have identical characteristics. In addition, the intermediate layer, which is free from fine particles, can improve transparency. In the 2 type-3 layer structure, the thickness of the polyester layers, which is laminated as back and front layers of the film and containing fine particles, is preferably 4% or more and 70% or less of an overall thickness. The thickness of less than 4% will cause the thickness of one side resin layer to be less than 2%, and if the thickness accuracy of the polyester resin layer containing fine particles is reduced during film production, the thickness of the layer containing fine particles may become too thin, making it difficult to obtain the desired surface protrusions. Therefore, it is not desirable. The thickness of more than 70% may be allowed, however, increased thickness of the polyester resin layer without fine particles will undesirably lead to decreased transparency. Of the two types of polyester resin layers forming the structure of 'polyester resin layer containing fine particles/polyester resin layer free from fine particles/polyester resin layer containing fine particles' of the 2 type-3 layer structure, the thickness ratio of the polyester resin layers containing fine particles is more preferably 8% or more and 60% or less, and particularly preferably 10% or more and 50% or less.

Preferably, a thermoplastic resin and/or a rubber component is added to a polystyrene-based resin. Examples of the thermoplastic resins include styrene-based resins such as polystyrene with an atactic structure, AS resin, and ABS resin; polyester-based resins such as polyethylene terephthalate, polyethylene naphthalate and polybutylene terephthalate; polyamide-based resins such as nylon 6, nylon 66, nylon 12, nylon 4, and polyhexamethylene adipamide; and polyolefin-based resins such as polyethylene, polypropylene, and polybutene.

The rubber component is preferably a rubber-form copolymer containing a styrene-based compound as its constituent component, and the rubber-form copolymer may be a random, block or graft copolymer obtained through copolymerization of one or more components selected from styrene and rubber components. Examples of the rubber-form copolymers include styrene/butadiene copolymer rubber, and styrene/isoprene block copolymer; rubbers each obtained by hydrogenating, partially or wholly, butadiene portions of one or more of these rubbers; and methyl acrylate/butadiene/styrene copolymer rubber, acrylonitrile/butadiene/styrene copolymer rubber, acrylonitrile/alkyl acrylate/butadiene/styrene copolymer rubber, and methyl methacrylate/alkyl acrylate/butadiene/styrene copolymer rubber. The rubber-form copolymer, which contains the styrene-based compound as its constituent component, has styrene units and thus has high dispersibility to polystyrene-based resin having a syndiotactic structure, leading to a large effect in improvement in plasticity of the polystyrene-based resin. In addition, the rubber-form copolymer containing the styrene-based compound as its constituent component can be preferably used as a compatibility adjuster.

Examples of other rubber components include natural rubber, polybutadiene, polyisoprene, polyisobutylene, neoprene, ethylene/propylene copolymer rubber, urethane rubber, silicone rubber, acrylic rubber, polyether/ester rubber, and polyester/ester rubber.

The polystyrene-based resin has the weight average molecular weight of preferably 10,000 or more, and more preferably 50,000 or more. A polystyrene-based resin having the weight average molecular weight of less than 10,000 is likely to cause a decrease in tensile strength properties and heat resistance of the film. The upper limit of the weight average molecular weight is not particularly limited, however, the weight average molecular weight of more than 1,500,000 will undesirably cause breakage of the film due to increase in orientation tension.

Different grades of polystyrene-based resins from various manufacturers are commercially available, and such a polystyrene-based resin can be used. The heat-shrinkable polyester film of the present invention may include one or two or more of other layers.

A multilayered film of the polyester layers and the polystyrene layer has the structure of, from the surface of the film, 'polyester layer /polystyrene layer /polyester layer', so that the polyester layers with excellent gloss and printability are laminated as outermost layers. However, because polyester and polystyrene are incompatible resins, delamination may occur. Accordingly, it is preferable to have the structure of 3 type-5 layer with an adhesive layer sandwiched between polyester layer/adhesive layer /polystyrene layer/adhesive layer/polyester layer' from the film surface. The film of the present invention may have a structure of 3 type-7 layer or 3 type-9 layer, however, such a structure requires larger equipment than the case of 3 type-5 layer structure.

In the 3 type-5 layer structure, the thickness of the polyester layers of an overall thickness is preferably 20% or more and 80% or less. In case where the thickness is less than 20%, the thickness of one polyester layer becomes less than 10%, leading to insufficient printability and gloss of the film. In case where the thickness is more than 80%, the polystyrene layer will become thin, undesirably leading to decreased inhibition effect of shrinkage in the longitudinal direction. In the 3 type-5 layer structure, the thickness of the polyester layer of an overall thickness is more preferably 25% or more and 75% or less, and particularly preferably 30% or more and 70% or less.

In the 3 type-5 layer structure, the thickness of adhesive layers of an overall thickness is preferably 1% or more and 14% or less. The thickness of less than 1% may undesirably cause a decrease in adhesiveness. The thickness of more than 14% may cause a decrease in the thickness of the polyester layers and polystyrene layer, undesirably leading to decreased heat shrinkage characteristics. In the 3 type-5 layer structure, the thickness of adhesive layers of an overall thickness is more preferably 2% or more and 12% or less, and particularly preferably 3% or more and 10% or less.

In the 3 type-5 layer structure, the thickness of polystyrene layer of an overall thickness is preferably 20% or more and 80% or less. The thickness of less than 20% may undesirably decrease inhibition effect of shrinkage in the longitudinal direction. The thickness of 80% or more may cause a decrease in thickness of one polyester layer to less than 10%, leading to insufficient printability and gloss of the film. In the 3 type-5 layer structure, the thickness of polystyrene layer of an overall thickness is preferably 25% or more and 75% or less, and particularly preferably 30% or more and 70% or less.

The heat-shrinkable polyester film of the present invention has a heat shrinkage rate in the width direction, which is the main shrinkage direction of the film, (i.e., hot-water heat shrinkage rate at 90°C) of preferably 40% or more and 80% or less. The hot water heat shrinkage rate is calculated using the following Equation (1) based on the length of the film before and after being treated with no load in hot water at 90°C for 10 seconds.

$$\text{Equation (1): heat shrinkage rate} = \{(\text{length before shrinkage} - \text{length after shrinkage}) / \text{length before shrinkage}\} \times 100 (\%)$$

The hot-water heat shrinkage rate at 90°C in the main shrinkage direction of less than 40% causes low shrinkage of the film, and thus the label after shrinking is undesirably wrinkled or loose in applications of the film for a beverage label and box lunch container packaging. The hot-water heat shrinkage rate at 90°C in the main shrinkage direction is more preferably 43% or more, particularly preferably 46% or more, and most preferably 50% or more.

The hot-water heat shrinkage rate at 90°C in the main shrinkage direction of more than 80% is allowed, however, the film having the hot-water heat shrinkage rate at 90°C in the main shrinkage direction of more than 80% is not obtained in the present invention. Therefore, the upper limit is determined to be 80%.

The heat-shrinkable polyester film of the present invention has a hot-water heat shrinkage rate at 90°C in the longitudinal direction, which is orthogonal to the main shrinkage direction of the film, of preferably -5% or more and 10% or less. The hot-water heat shrinkage rate at 90°C in the longitudinal direction of less than -5% causes the label to elongate and increases the label height on a PET bottle, which is undesirable, in application for beverage labeling. The hot-water heat shrinkage rate at 90°C in the longitudinal direction is more preferably -4% or more, and particularly preferably -3% or more. The hot-water heat shrinkage rate at 90°C in the longitudinal direction of more than 10% causes the label to shrink and decreases the label height on a PET bottle, which is undesirable, in application for beverage labeling. It can also cause distortion of label after shrinking. The hot-water heat shrinkage rate at 90°C in the longitudinal direction is more preferably 9% or less, further preferably 8% or less, particularly preferably 7% or less, and most preferably 6% or less.

The heat-shrinkable polyester film of the present invention has a maximum peak height Sp on at least one surface of the film of preferably 3.0 μm or less, more preferably 2.5 μm or less, and further preferably 2.0 μm or less. The maximum peak height Sp of more than 3.0 μm leads to formation of coarse protrusions on the film and thus causes omission in printing, resulting in undesirably degraded film quality due to poor printing appearance or poor design properties.

The heat-shrinkable polyester film of the present invention has a maximum peak height Sp on at least one surface of the film of preferably 0.8 μm or more, more preferably 1.2 μm or more, and further preferably 1.6 μm or more. In case where the maximum peak height Sp is less than 0.8 μm, non-uniform removal of air entrapped during winding into a roll causes appearance defects such as wrinkles and pimple shaped air bubbles, leading to deteriorated winding properties.

The heat-shrinkable polyester film of the present invention has an arithmetical mean height Sa on at least one surface of the film of preferably 0.2 μm or less, more preferably 0.18 μm or less, and further preferably 0.16 μm or less. The arithmetical mean height Sa of more than 0.2 μm increases irregularity on film surface, resulting in decreased transparency or deteriorated printability.

The heat-shrinkable polyester film of the present invention has an arithmetical mean height Sa on at least one surface of the film of preferably 0.03 μm or more, more preferably 0.035 μm or more, and further preferably 0.04 μm or more. In case where the arithmetical mean height Sa is less than 0.03 μm, non-uniform removal of air entrapped during winding into a roll causes appearance defects such as wrinkles and pimple shaped air bubbles, leading to deteriorated winding properties.

The heat-shrinkable polyester film of the present invention has a degassing time for removing air from stacking front and back surfaces of the films of preferably 14 seconds or less, more preferably 13 seconds or less, further preferably 12 seconds or less, and particularly preferably 10 seconds or less. In case where the degassing time is more than 14 seconds, air is entrapped into a roll and the air is not uniformly removed in manufacturing, rewinding, and slitting processes, all of which require winding of film into a roll, and this non-uniform removal of air causes appearance defects such as wrinkles and pimple shaped air bubbles.

The heat-shrinkable polyester film of the present invention has a haze at a film thickness of 30 μm of 11% or less, more preferably 9% or less, further preferably 7% or less, and particularly preferably 5% or less. The haze at a film thickness of 30 μm of more than 11% will cause the degradation of printing appearance or difficulties in detecting foreign substances in ongoing processing at high speed, and a film with sufficient quality may not be obtained.

The heat-shrinkable polyester film of the present invention has a thickness of preferably 15 μm or more 50 μm or less. A film having a thickness of less than 15 μm has significantly decreased stiffness, and a film roll that can be easily wrinkled may be undesirably produced. A film roll of thick film may be allowed, however, film thickness should be preferably reduced from a cost and environmental point of view. The film has a thickness of more preferably 17 μm or more and 45 μm, and particularly preferably 20 μm or more and 40 μm.

The heat-shrinkable polyester film of the present invention can be obtained through formation of an unstretched film from polyester raw materials by melt extrusion with an extruder, followed by uniaxial transverse stretching and heat treatment of the stretched film by a prescribed method described below. For lamination of layers, multiple extruders, a feed block, and a multi-manifold may be used. The polyester is obtained by polycondensation of above-described preferred dicarboxylic acid and diol components by known methods. Normally, two or more types of chip-shaped polyester are mixed and used as raw materials for film. In case of lamination, multiple extruders may be used.

The polyester raw materials are preferably dried with dryers such as a hopper dryer, a paddle dryer, or a vacuum dryer, for melt extrusion of resin raw materials. The dried polyester raw materials are melted at a temperature of 200 to 300°C in an extruder and extruded into a film from it. The film may be extruded by any conventional method, such as T-die method or tubular method.

Then, an unstretched film is produced by rapidly cooling the extruded sheet-shaped molten resin. In one method of rapidly cooling, molten resin is cast from a nozzle onto a rotating drum to rapidly cool and solidify it, resulting in a substantially unoriented resin sheet. This method is preferably employed.

Further, thus obtained unstretched film is stretched in the width direction under predetermined conditions, as described below, and the heat-shrinkable polyester film of the present invention can be obtained. Hereinafter, preferred stretching methods and conditions to obtain the heat-shrinkable polyester film of the present invention will be described. By employing such preferred methods and conditions described below, a film surface suitable for the present invention can be formed.

A heat-shrinkable polyester film is generally produced by stretching an unstretched film in a direction desired to be shrunk. Alternatively, the film is produced by a production method involving biaxial stretching, in which a film is transversely stretched after being stretched in a vertical direction. However, the biaxial stretching requires large-scale equipment. In the present invention, a heat-shrinkable polyester film is produced through uniaxial stretch in the width direction as the main shrinkage direction of the film. A production method involving uniaxial stretching in a width (transverse) direction does not need equipment for stretching in the longitudinal direction, therefore, the production method has an advantage in the manufacture with simple equipment.

For widthwise stretching, an unstretched film is introduced to a tenter capable of grip the film at both ends with clips and heat the film with hot air to a predetermined temperature. And then the film is stretched in the width direction by increasing the distance between clips while the film is being conveyed in the longitudinal direction.

The unstretched film is preheated at a temperature of preferably Tg (of the film) +10°C or higher and Tg+80°C or lower, and more preferably Tg+20°C or higher and Tg+60°C or lower. A preheating temperature of lower than Tg+10°C is insufficient and may cause increased stretching force, leading to breakage of film. Preheating at a temperature higher than Tg+80°C may decrease stretching force in the width direction of the unstretched sheet, and may cause reduction in thickness accuracy (thickness unevenness) in the width direction. The preheating is conducted more preferably at a temperature of Tg+30 or higher and Tg+50°C or lower.

The film temperature during stretching in the width direction is preferably Tg°C (of the film) or higher and Tg+30°C or lower. The film temperature of lower than Tg may significantly cause an increase in a stretching force and thus undesirably lead to breakage of the film. The film temperature higher than Tg+30°C may significantly cause a decrease in a stretching force and thus undesirably lead to low heat shrinkage rate in the width direction, which is measured at 90°C as described above. The film temperature is more preferably Tg+3°C or higher and Tg+25°C or lower, further preferably Tg+5°C or higher and Tg+20°C or lower.

A stretching ratio in the width direction is preferably 3.5 times or more and 6 times or less. A stretching ratio of less than 3.5 times may cause insufficient stretching force, leading to a reduction in thickness accuracy (so-called thickness unevenness) in the width direction of the film. Undesirably, a stretching ratio of more than 6 times will increase the risk of breakage during film formation, and a large equipment will be needed. The stretching ratio is more preferably 3.7 times or more and 5.5 times or less. Although it is not particularly limited, a heat treatment may be performed to control shrinkage rate, after stretching in the width direction. A film temperature during heat fixing is preferably equal to or higher than a temperature for stretching in the width direction and equal to or lower than a temperature for the stretching temperature in the width direction + 30°C. In case where the heat fixing temperature of the film is lower than the stretching temperature in the width direction, molecules are not sufficiently relaxed in the width direction, leading to ineffective heat fixing. In case where the heat fixing temperature of the film exceeds the temperature for the stretching temperature in the width direction +30°C, undesirably, the film may be crystallized, leading to low shrinkage rate. The heat fixing temperature is more preferably a temperature for the stretching temperature in the width direction + 1°C or higher and a temperature for the stretching temperature in the width direction + 25°C or lower, and further preferably a temperature for the stretching temperature in the width direction + 2°C or higher and a temperature for the stretching temperature in the width direction + 20°C or lower.

The heat-shrinkable polyester film of the present invention can be made into a label by conventional methods. For example, a heat-shrinkable polyester film cut to desired width may be printed, and a tubular film will be produced by overlapping and adhering the left and right edge portions of the film by solvent adhesion. The tubular film is then cut to an appropriate length to form a tubular-shaped label. Organic solvents used preferably for adhesion are exemplified by cyclic ethers such as 1,3-dioxolane and tetrahydrofuran. In addition, aromatic hydrocarbons such as benzene, toluene, xylene, and trimethylbenzene; halogenated hydrocarbons such as methylene chloride and chloroform; phenols such as phenol, and mixtures thereof may be used.

The label is then perforated by know method and covers a PET bottle. The PET bottle is placed on a conveyor belt and passes through either a shrinking tunnel with steam blowing on an object (steam tunnel), or a shrinking tunnel with blowing of hot air on an object (hot air tunnel). When the label and a PET bottle covered with the label pass through the tunnel, the label shrinks by heat, resulting in the PET bottle fitted with the label.

A package product of the present invention is formed by covering at least a part of periphery of an object for packaging with perforated or notched label obtained from the heat-shrinkable label of the present invention, and then the label is heated to shrink and conform to the shape of the object. An object for packaging is exemplified by various bottles such as PET bottles for beverages, cans, plastic containers for confectionery or packed lunch, and paper boxes. Generally, when covering a packaging object with a label obtained from a heat-shrinkable polyester label, the label is heat-shrunk by approximately 5 to 70% to achieve a tight fit. The labels for covering the objects may be printed or unprinted.

EXAMPLES

Hereinafter, the present invention will be specifically described with Examples and Comparative Examples. The scope of the present invention is not limited by the embodiments of Examples, and the present invention can be carried out with modifications, if needed, in the range not departing from the spirit of the present invention. Evaluation methods of films are described below.

[Heat shrinkage rate (hot-water heat shrinkage rate)]

Film was cut into a square of 10 cm × 10 cm in size and the film was immersed in hot-water at 90°C±0.5°C for 10 seconds with no load to be heat-shrunk, then immersed in water at 25°C±0.5°C for 10 seconds, and pulled out of the water. Then, dimensions of the film were measured in both the longitudinal (vertical) and width (transverse) directions, and the heat shrinkage rate in each direction was determined according to the following Formula (1). The direction having a larger heat shrinkage rate was defined as a main shrinkage direction.

$$\text{Formula (1): heat shrinkage rate} = \{(\text{length before shrinkage} - \text{length after shrinkage}) / \text{length before shrinkage}\} \times 100(\%)$$

[Arithmetical mean height Sa and Maximum peak height Sp]

A sample film with an area of 10 cm × 10 cm (longitudinal direction × width direction) was cut out from the obtained film. The arithmetical mean height Sa (μm) and maximum peak height Sp (μm) were measured by scanning the film under the following observation conditions with a white laser interferometer (NEW VIEW 8300, manufactured by Zygo Corporation) in accordance with ISO 25178. The measurement was carried out on the surface of the sample film, except for foreign substances such as unmelted material and dust.

The measurement was conducted at any 10 points of the sample film of 10 cm × 10 cm, and each average value was determined as an arithmetical mean height Sa or a maximum peak height Sp, respectively.

(Observation conditions)

·Objective lens: 10 ×
·Zoom lens: 1×
·Field of view: 0.82 × 0.82 mm
·Sampling interval: 0.803 μm
·Estimated measurement time: 4 seconds
·Type: Surface
·Mode: CSI
·Z resolution: High
·Scan length: 20 μm
·Camera Mode: 1024 × 1024 at 100 Hz
·Shutter speed: 100%
·Intensity: 1.3%
·Options: SureScan Off

SmartPsi Averages 4
noise reduction

·Signal processing options:

fringe order analysis Advanced
fringe removal ON

[Degassing time]

As shown in Figure 1, a film 4 is placed on a base platform 1. A film holddown 2 is placed on the top of the film 4, and the film 4 is fixed while being applied tension by fixing. Next, a film 5 is placed on the film holddown 2 so that the downward surface of the film 5 is identical to the back surface of the upward front surface of the film 4, which is placed on the base platform 1. Then, a film holddown 8 is placed on the film 5, and the film holddown 8, the film holddown 2, and the platform 1 are fixed with a screw 3.

An opening 2a formed in the film holddown 2 is connected to a vacuum pump 6 through a pipe 7 and a pore 2c, which is formed in the film holddown 2. Through driving the vacuum pump 6, the film 5 sticks to the opening 2a and tension caused by the sticking is applied to the film 5. At the same time, the stacking surfaces of the films 4 and 5 are also depressurized through a pore 2d formed circumferentially in the film holddown 2, and the films 4 and 5 start to closely contact with each other from a periphery of the stacking surfaces.

The state of the close contact can be easily known by observing interference fringes of the stacking surfaces from above. The degassing time for removing air from between the two identical polyester films (seconds) is determined by measuring required time for interference fringes to appear at the outer periphery of the stacking surfaces of the films 4 and 5 and spread to the front of the stacking surfaces, before the interference fringes stop spreading. The measurement is repeated 5 times by replacing the two films for each measurement, and the average value is determined.

[Thickness of film]

Thickness of film was measured by a dial gauge in accordance with JIS K7130-1999 A method.

[Haze of film]

Film was cut out into a square having a side of 10 cm, and then haze of the sample film was measured by a haze meter (NDH2000, manufactured by NIPPON DENSHOKU INDUSTRIES CO., LTD.) in accordance with JIS K 7361-1. Haze was measured at 3 points on the film, the average of the 3 points was determined as a measurement value of haze, and the haze of 30 μm equivalent value was calculated according to the following Formula (2).

$$\text{Formula (2): haze} = \text{measurement value of haze} \times 30 \text{ /film thickness (\%/30}\mu\text{m)}$$

[Tg (Glass transition point)]

Tg was measured by differential scanning calorimeter (type: DSC220, manufactured by Seiko Electronic Industry) in accordance with JIS K 7121-1987. Specifically, an unstretched film (10 mg) was heated from -40°C to 120°C at a heating rate of 10 °C/min to measure an endothermic curve. Tangent lines were drawn before and after the inflection point of the obtained endothermic curve, and the intersection of the lines was determined as a glass transition point (Tg; °C) of the film.

[Intrinsic viscosity (IV)]

Intrinsic viscosity was measured at 30°C by an Ostwald viscometer with polyester (0.2 g) dissolved into a mixed solvent (50 ml) of phenol/1,1,2,2-tetrachloroethane (60/40, weight ratio). The unit is dl/g.

[Compositional analysis]

A sample solution was prepared by dissolving each sample into a solvent of chloroform D (manufactured by Eurisotop) and trifluoroacetic acid D1 (manufactured by Eurisotop) mixed at a ratio of 10:1 (volume ratio). Proton NMR of the sample solution was measured under measurement conditions of 23°C and integration times of 64 by NMR (GEMINI-200, manufactured by Varian, Inc). In the NMR measurement, the peak intensities of predetermined protons were calculated, and the amounts of components in 100 mol% of polycarboxylic acid component and in 100 mol% of polyol component were measured.

[Shrinkage finishing properties]

Edge portions of the heat-shrinkable film were welded with an impulse sealer (manufactured by Fujiimpulse Co., Ltd.) to form an annular-shaped label, which has its circumferential direction in the width direction of the film. Holes of 0.5 mm in size were made at 3 mm intervals in the longitudinal direction of the film. With an interval of 10 mm provided in the width direction of the film, holes of 0.5 mm in size were similarly made at 3 mm intervals in the longitudinal direction of the film. (The holes were so-called perforations, which enable easy removal of labels.) The label had a diameter of 68 mm in the label shrinkage direction. The label covered commercially available PET bottle (with contents, size: 500 ml, trunk diameter: 62 mm, minimum neck diameter: 25 mm) and was heat-shrunk with steam by passing through a steam tunnel (type: SH-1500-L, manufactured by Fuji Astec Inc.) set at 90°C (tunnel passing time: 5 seconds). The shrinkage finishing properties of the label were visually evaluated at 5 levels according to the following criteria. The defects described below include jumping, wrinkles, shrinkage insufficiency, folding of label edges, and whitening caused by shrinkage. The labels evaluated as level 3 or higher were acceptable.

5: best in shrinkage finishing properties (with no defect)
4: good in shrinkage finishing properties (with 1 defect)
3: with 2 defects
2: with 3 to 5 defects
1: with a number of defects (6 or more defects)

[Evaluation of wrinkles on film roll]

The heat-shrinkable polyester film after film formation was wound up as a film roll of 500 mm in width and 1000 m in winding length, and wrinkles on the surface layers of the film roll were evaluated visually according to the following criteria: The film judged to be "Good"or "Fair" was acceptable.

Good: without wrinkles
Fair: with slight wrinkles, however, the wrinkles disappear by applying tension of around 20 N/m to unwound film.
Bad: with prominent wrinkles, and the wrinkles do not disappear even by applying tension of around 20 N/m to unwound film.

[Evaluation of printability]

On a film roll with a width of 500 mm and a roll length of 1000 m, printing (one-color printing) was performed with grass-colored ink (manufactured by TOYO INK CO., LTD.). The thickness of the ink after printing was 1 μm. The film after printing was examined for dot shaped omission of ink in printing for an area of 900 $mm^2$ per measurement (30 mm in the longitudinal direction and 30 mm in the width direction) with a loupe having a magnification of 5 ×. The measurement was conducted at any 3 measurement points in the width direction of a film roll after printing. Further, measurement was similarly conducted for another 3 points (totally 6 points) in the width direction, which were longitudinally 50 m apart from the first three points, and an area of 900 $mm^2$ per measurement (30 mm in the longitudinal direction and 30 mm in the width direction) was examined with a loupe having a magnification of 5×. The film judged to be "Good" or "Fair" was acceptable.

Good: less than 1% of dot shaped omission of ink
Fair: 1% or more and less than 3% of dot shaped omission of ink
Bad: 3% or more of dot shaped omission of ink

[Preparation of polyester raw material]

In a stainless-steel autoclave equipped with an agitator, a thermometer, and a partial circulation type cooler, 100 mol% of dimethyl terephthalate (DMT) as a dibasic acid component and 100 mol% of ethylene glycol (EG) as a glycol component were charged, so that the mole ratio of glycol to methyl ester became 2.2. Zinc acetate as a transesterification catalyst was used at a rate of 0.05 mol% (to the acid component), and transesterification reaction was carried out while methanol produced was being distilled away from the system. After that, antimony trioxide as a polycondensation catalyst was added at a rate of 0.025 mol% (to the acid component), and a polycondensation reaction was carried out at 280°C under a reduced pressure of 26.6 Pa (0.2 Torr) to produce polyester A with intrinsic viscosity of 0.75 dl/g. The polyester was polyethylene terephthalate.

In the production process, polyesters B1 to B8 were produced through addition of $SiO_2$ as a lubricant at a rate of 8,000 ppm to the polyester, and thus produced polyesters had intrinsic viscosity of 0.75 dl/g. Each $SiO_2$ lubricant was as follows: a lubricant with a spherical shape and a weight-average particle size of 1 μm for polyester B1; a lubricant with an indefinite shape and a weight-average particle size of 1.5 μm for polyester B2; a lubricant with an indefinite shape and a weight-average particle size of 2 μm for polyester B3; a lubricant with an indefinite shape and a weight-average particle size of 2.5 μm for polyester B4: a lubricant with an indefinite shape and a weight-average particle size of 3 μm for polyester B5: a lubricant with an indefinite shape and a weight-average particle size of 4 μm for polyester B6: a lubricant with an indefinite shape and a weight-average particle size of 5 μm for polyester B7: and a lubricant with an indefinite shape and a weight-average particle size of 6 μm for polyester B8.

Polyesters (C, D, and E) shown in Table 1 were synthesized in the same manner as above. In Table 1, NPG represents neopentyl glycol, CHDM represents 1,4-cyclohexanedimethanol, and BD represents 1,4-butanediol. Polyesters C, D, and E have intrinsic viscosity of 0.75 dl/g, 0.75 dl/g, and 1.15 dl/g, respectively. Each polyester was made into the form of chips, if needed.

Tables 1 and 2 show details of raw material chips used in Examples and Comparative Examples, and the resin composition, layer structures, and production conditions of the films in Examples and Comparative Examples.

[Table 1]

| | Composition of polyester raw material (mol %) | | | | | Amount of lubricant added (ppm) | Silica | | Intrinsic Viscosity (dl/g) |
|---|---|---|---|---|---|---|---|---|---|
| | Dicarboxylic acid component | Polyol component | | | | | Shape | Weight average particle size (μm) | |
| | DMT | EG | NPG | CHDM | BD | | | | |
| Polyester A | 100 | 100 | - | - | - | 0 | - | - | 0.75 |
| Polyester B1 | 100 | 100 | - | - | - | 8000 | Spherical | 1 | 0.75 |
| Polyester B2 | 100 | 100 | - | - | - | 8000 | Indefinite | 1.5 | 0.75 |

(continued)

| | Composition of polyester raw material (mol %) | | | | | Amount of lubricant added (ppm) | Silica | | Intrinsic Viscosity (dl/g) |
|---|---|---|---|---|---|---|---|---|---|
| | Dicarboxylic acid component | Polyol component | | | | | Shape | Weight average particle size (μm) | |
| | DMT | EG | NPG | CHDM | BD | | | | |
| Polyester B3 | 100 | 100 | - | - | - | 8000 | Indefinite | 2 | 0.75 |
| Polyester B4 | 100 | 100 | - | - | - | 8000 | Indefinite | 2.5 | 0.75 |
| Polyester B5 | 100 | 100 | - | - | - | 8000 | Indefinite | 3 | 0.75 |
| Polyester B6 | 100 | 100 | - | - | - | 8000 | Indefinite | 4 | 0.75 |
| Polyester B7 | 100 | 100 | - | - | - | 8000 | Indefinite | 5 | 0.75 |
| Polyester B8 | 100 | 100 | - | - | - | 8000 | Indefinite | 6 | 0.75 |
| Polyester C | 100 | 80 | 20 | - | - | 0 | - | - | 0.75 |
| Polyester D | 100 | 80 | - | 20 | - | 0 | - | - | 0.75 |
| Polyester E | 100 | - | - | - | 100 | 0 | - | - | 1.15 |

| | Contents of raw material chip | |
|---|---|---|
| | Properties | Manufacturer, Product name |
| Chip F | Styrene/butyl acrylate copolymer | PS Japan Corporation, SC004 |
| Chip G | Polystyrene | PS Japan Corporation, HH203 |
| Chip H | Styrene/butadiene block copolymer | Denki Kagaku Kogyo Kabushiki Kaisha, CLEAREN 530L |
| Chip I | Styrene/butadiene block copolymer | Asahi Kasei Chemicals Corporation, TUFPRENE 126 |

| | Layer structure | | Molten resin temperature (°C) | Resin composition of each layer | Lubricant | | Thickness before stretching (μm) | Stretching conditions in transverse (width) direction | | | |
|---|---|---|---|---|---|---|---|---|---|---|---|
| | | | | | | | | Preheating process | Stretching process | | Heat treatment process |
| | | | | | Shape | Particle size (μm) | | Temperature setting (°C) | Temperature setting (°C) | Stretching ratio | Temperature setting (°C) |
| Example 1 | 2 type-3 layer skin/core/ skin=1/2/1 | Core layer | 260 | A:C:E=20:70: 10 | - | - | 138 | 95 | 78 | 4.6 | 83 |
| | | Skin layer | 260 | A:B3:C: E=12:8:70:10 | Indefinite | 2 | | | | | |
| Example 2 | 2 type-3 layer skin/core/ skin=1/2/1 | Core layer | 260 | A:C:E=20:70: 10 | - | - | 138 | 95 | 78 | 4.6 | 83 |
| | | Skin layer | 260 | A:B4:C: E=12:8:70:10 | Indefinite | 2.5 | | | | | |
| Example 3 | 2 type-3 layer skin/core/ skin=1/2/1 | Core layer | 260 | A:C:E=20:70: 10 | - | - | 138 | 95 | 78 | 4.6 | 83 |
| | | Skin layer | 260 | A:B5:C: E=12:8:70:10 | Indefinite | 3 | | | | | |
| Example 4 | 2 type-3 layer skin/core/ skin=1/2/1 | Core layer | 260 | A:C:E=20:70: 10 | - | - | 138 | 95 | 78 | 4.6 | 83 |
| | | Skin layer | 260 | A:B6:C: E=12:8:70:10 | Indefinite | 4 | | | | | |
| Example 5 | 2 type-3 layer skin/core/ skin=1/2/1 | Core layer | 260 | A:C:E=20:70: 10 | - | - | 138 | 95 | 78 | 4.6 | 83 |
| | | Skin layer | 260 | A:B7:C: E=12:8:70:10 | Indefinite | 5 | | | | | |
| Example 6 | 1 type-3 layer | Core layer | 260 | A:B3:C: E=12:8:70:10 | Indefinite | 2 | 138 | 95 | 78 | 4.6 | 83 |
| | | Skin layer | 260 | A:B3:C: E=12:8:70:10 | Indefinite | 2 | | | | | |

(continued)

| | Layer structure | | Molten resin temperature (°C) | Resin composition of each layer | Lubricant | | Thickness before stretching (μm) | Stretching conditions in transverse (width) direction | | | |
|---|---|---|---|---|---|---|---|---|---|---|---|
| | | | | | | | | Preheating process | Stretching process | | Heat treatment process |
| | | | | | Shape | Particle size (μm) | | Temperature setting (°C) | Temperature setting (°C) | Stretching ratio | Temperature setting (°C) |
| Example 7 | 3 type-5 layer skin/ intermediate/ core /intermediate/ skin =23/3/48/3/23 | Skin layer | 260 | A:B4:C: E=12:8:70:10 | - | - | 138 | 95 | 82 | 4.6 | 83 |
| | | Intermediate layer | 200 | F=100 | - | - | | | | | |
| | | Core layer | 200 | G:H:I=43:43: 14 | Indefinite | 2.5 | | | | | |
| Example 8 | 2 type-3 layer skin/core/ skin=1/2/1 | Core layer | 260 | A:D:E=20:70: 10 | - | - | 138 | 95 | 78 | 4.6 | 83 |
| | | Skin layer | 260 | A:B3:D: E=12:8:70:10 | Indefinite | 2 | | | | | |
| Example 9 | 2 type-3 layer skin/core/ skin=1/2/1 | Core layer | 260 | A:C:E=20:70: 10 | - | - | 138 | 100 | 86 | 4.6 | 86 |
| | | Skin layer | 260 | A:B1:C:E=4: 16:70:10 | Spherical | 1 | | | | | |
| Comparative Example 1 | 2 type-3 layer skin/core/ skin=1/2/1 | Core layer | 260 | A:C:E=20:70: 10 | - | - | 138 | 95 | 78 | 4.6 | 83 |
| | | Skin layer | 260 | A:B1:C: E=12:8:70:10 | Spherical | 1 | | | | | |
| Comparative Example 2 | 2 type-3 layer skin/core/ skin=1/2/1 | Core layer | 260 | A:C:E=20:70: 10 | - | - | 138 | 95 | 78 | 4.6 | 83 |
| | | Skin layer | 260 | A:B2:C: E=12:8:70:10 | Indefinite | 1.5 | | | | | |

(continued)

| | Layer structure | | Molten resin temperature (°C) | Resin composition of each layer | Lubricant | | Thickness before stretching (μm) | Stretching conditions in transverse (width) direction | | | |
|---|---|---|---|---|---|---|---|---|---|---|---|
| | | | | | | | | Preheating process | Stretching process | | Heat treatment process |
| | | | | | Shape | Particle size (μm) | | Temperature setting (°C) | Temperature setting (°C) | Stretching ratio | Temperature setting (°C) |
| Comparative Example 3 | 2 type-3 layer skin/core/ skin=1/2/1 | Core layer | 260 | A:C:E=20:70: 10 | - | - | 138 | 95 | 78 | 4.6 | 83 |
| | | Skin layer | 260 | A:B8:C: E=12:8:70:10 | Indefinite | 6 | | | | | |
| Comparative Example 4 | 2 type-3 layer skin/core/ skin=1/2/1 | Core layer | 260 | A:C:E=20:70: 10 | - | - | 138 | 95 | 83 | 4.6 | 88 |
| | | Skin layer | 260 | A:B1:C:E=4: 16:70:10 | Spherical | 1 | | | | | |
| Comparative Example 5 | 2 type-3 layer skin/core/ skin=1/2/1 | Core layer | 260 | A:C:E=20:70: 10 | - | - | 138 | 76 | 76 | 4.6 | 88 |
| | | Skin layer | 260 | A:B3:C: E=12:8:70:10 | Indefinite | 2 | | | | | |

Example 1

A resin for forming a core layer and a resin for forming a skin layer were melt extruded from different extruders (first and second extruders) by a co-extruding method, then laminated in a die (T-die), and rapidly cooled through winding extruded molten laminate on a rotating metal roll cooled to a surface temperature of 30°C, to produce an unstretched film having a thickness of 138 μm and a 2 type-3 layer structure. In the 2 type-3 layer structure, the skin layers were laminated on each outer surface of the core layer of the unstretched film. For forming the core layer, polyester A, polyester C, and polyester E described above were mixed at a ratio of 20:70:10 (weight ratio) and fed to the extruder. The mixed resin was melted at 260°C. For forming the skin layer, polyester A, polyester B3, polyester C, and polyester E were mixed at a ratio of 12:8:70:10 (weight ratio) and fed to the extruder. The mixed resin was melted at 260°C. The structure, skin layer/core layer/skin layer, had a ratio of thickness of 1:2:1. The unstretched film was taken up at a speed (rotation speed of the metal roll) of about 30 m/min. Tg of the unstretched film was 69°C.

Thus obtained unstretched film was introduced to a tenter (transverse stretching machine). The temperature of preheating process was set at 95°C (Tg+26°C) and the temperature of stretching process was set at 78°C (Tg+9°C), and the film was stretched by 4.6 times. The transversely stretched film was heat treated at 83°C (stretching temperature +5°C) for 8 seconds in a tension state. After that, the film was cooled, both edge portions of the film were cut off to a film width of 800 mm, and a stretched film having a thickness of 30 μm was continuously produced over a length of 2000 m by winding the film in the shape of a roll. The characteristics of the obtained film were evaluated by the above-mentioned methods. Table 3 shows the evaluation results. The film had excellent characteristics in wrinkles on the film roll and shrinkage finishing properties.

Example 2

The film was produced in the same manner as Example 1 except that polyester B3 was changed to polyester B4, and a film having a thickness of 30 μm was obtained. Table 3 shows the evaluation results. The film of Example 2 had reduced degassing time compared to that of Example 1, and the film had excellent characteristics in wrinkles on a film roll and shrinkage finishing properties.

Example 3

The film was produced in the same manner as Example 1 except that polyester B3 was changed to polyester B5, and a film having a thickness of 30 μm was obtained. Table 3 shows the evaluation results. The film of Example 3 had reduced degassing time compared to that of Example 1, and the film had excellent characteristics in wrinkles on a film roll and shrinkage finishing properties.

Example 4

The film was produced in the same manner as Example 1 except that polyester B3 was changed to polyester B6, and a film having a thickness of 30 μm was obtained. Table 3 shows the evaluation results. Although the film of Example 4 had slightly increased haze, the film had reduced degassing time compared to that of Example 1, and the film had excellent characteristics in wrinkles on a film roll and shrinkage finishing properties.

Example 5

The film was produced in the same manner as Example 1 except that polyester B3 was changed to polyester B7, and a film having a thickness of 30 μm was obtained. Table 3 shows the evaluation results. Although the film of Example 5 had slightly increased haze, the film had reduced degassing time compared to that of Example 1, and the film had excellent characteristics in wrinkles on a film roll and shrinkage finishing properties.

Example 6

The film was produced in the same manner as Example 1 except that raw materials for the core layer of Example 1 were changed to raw materials for the skin layer of Example 1 and the layer structure was changed to a 1 type-3 layer structure. A film having a thickness of 30 μm was obtained. Table 3 shows the evaluation results. Although the film of Example 6 had slightly increased haze, the film had excellent characteristics in wrinkles on a film roll and shrinkage finishing properties.

Example 7

A resin for forming a core layer, a resin for forming a skin layer, and a resin for forming an adhesive layer were melt extruded from different extruders (first to third extruders) by a co-extruding method, then laminated in a die (T-die), and rapidly cooled through winding extruded molten laminateby an air-knife method on a rotating metal roll cooled to 30°C, to produce an unstretched film (a polystyrene-based resin laminated sheet) having a thickness of 138 μm and a 3 type-5 layer structure. In the 3 type-5 layer structure, intermediate layers (adhesive layers) were laminated on both front and back surfaces of the core layer, and the skin layers were laminated on both outer surfaces of the intermediate layers. The following is a method for forming each layer of the unstretched film, down to the melt extrusion process. In the following description, a polystyrene-based mixed-resin laminated sheet has, from its front to back sides, a first, a second, a third, a fourth, and a fifth layers, in which the fifth layer has a surface contacted with the surface of the metal roll. The unstretched film was taken up at a speed (rotation speed of the metal roll) of about 30 m/min.

•Formation of the first and the fifth layers (skin layers)

Polyester A, polyester B4, polyester C, and polyester E were dried, mixed at a ratio of 12:8:70:10, and fed to the first extruder. The mixed resin was melt extruded at 260°C, so that the skin layers were laminated on outer surfaces of the intermediate layers, which were laminated on outer surfaces, i.e., front and back surfaces, of the core layer. To stabilize extrusion from a T-die, a helical and parallel type gear pump was provided between the extruder and the T-die.

·Formation of the second and the fourth layers (adhesive layers)

Above-described chip F was pre-dried by a blender machine, and the dried chip was continuously fed to a hopper disposed directly above the second extruder by a constant-supply screw feeder. Chip D fed thereto was melt extruded from a T-die, so that the adhesive layers were laminated on outer surfaces, i.e., front and back surfaces, of the core layer. The temperature of the second extruder was set at 200°C. Similar to the extrusion by the first extruder, a helical and parallel type gear pump was provided between the extruder and the T-die to stabilize extrusion from a T-die.

•Formation of the third layer (core layer)

Chips G, H, and I described above were each pre-dried by a blender machine, and fed to the third extruder at a mixing ratio of 43:43:14. The mixed resin was melt extruded at 200°C. Similar to the extrusion by the first and second extruders, a helical and parallel type gear pump was provided between the extruder and a T-die to stabilize extrusion from the T-die.

In the resin extrusion by each of above extruders, the discharge amount from the first to third extruders were controlled so that the layers, i.e., 'first layer/second layer/third layer/fourth layer/fifth layer', had thickness of 23/3/48/3/23 to form the unstretched film.

The film was produced in the same manner as Example 1 except that stretching temperature in the width direction of thus obtained unstretched film was changed to 82°C, and the film having a thickness of 30 μm was obtained. Table 3 shows the evaluation results. The film of Example 7 had excellent characteristics in wrinkles on a film roll and shrinkage finishing properties.

Example 8

The film was produced in the same manner as Example 1 except that polyester C was changed to polyester D, and a film having a thickness of 30 μm was obtained. Tg of the unstretched film was 69°C. Table 3 shows the evaluation results. The film of Example 8 had excellent characteristics in wrinkles on a film roll and shrinkage finishing properties.

Example 9

The film was produced in the same manner as Example 1 except that polyester B3 was changed to polyester B1, and raw materials for a skin layer were changed to polyester A, polyester B1, polyester C, and polyester E with a weight ratio of 4/16/70/10. In addition, temperatures for preheating process, stretching process, and heat treatment were changed to 100°C, 85°C, and 86°C, respectively, in a widthwise stretching process of an unstretched film. Thus obtained film had a thickness of 30 μm. Table 3 shows the evaluation results. The film of Example 9 had excellent characteristics in wrinkles on a film roll and shrinkage finishing properties.

Comparative Example 1

The film was produced in the same manner as Example 1 except that polyester B3 was changed to polyester B1, and a film having a thickness of 30 μm was obtained. Table 3 shows the evaluation results. The film of Comparative Example 1 had increased degassing time compared to that of Example 1, and wrinkles on a film roll were prominent.

Comparative Example 2

The film was produced in the same manner as Example 1 except that polyester B3 was changed to polyester B2, and a film having a thickness of 30 μm was obtained. Table 3 shows the evaluation results. The film of Comparative Example 2 had increased degassing time compared to that of Example 1, and wrinkles on a film roll were prominent.

Comparative Example 3

The film was produced in the same manner as Example 1 except that polyester B3 was changed to polyester B8, and a film having a thickness of 30 μm was obtained. Table 3 shows the evaluation results. The film had reduced degassing time and excellent characteristics in wrinkles. However, the film had increased maximum peak height Sp and arithmetical mean height on its surface, leading to dot shaped omission of ink in printing. The film was inferior in printability.

Comparative Example 4

The film was produced in the same manner as Example 9 except that temperatures for preheating process, stretching in a width direction, and heat treatment were changed to 95°C, 83°C, and 88°C, respectively, in a widthwise stretching process of an unstretched film. Thus obtained film had a thickness of 30 μm. Table 3 shows the evaluation results. The film of Comparative Example 4 had increased degassing time compared to that of Example 1, and wrinkles of the film were prominent.

Comparative Example 5

The film was produced in the same manner as Example 1 except that a temperature for preheating and stretching processes were changed to 76°C(Tg+7°C), and a temperature for heat treatment was changed to 88°C, in a widthwise stretching process of an unstretched film. Thus obtained film had a thickness of 30 μm. Table 3 shows the evaluation results. The film of Comparative Example 5 had increased degassing time compared to that of Example 1, and wrinkles on the film were prominent. This is thought to be due to increased stretching stress during stretching of the film, thereby causing a lubricant to be crushed.

[Table 3]

| | Film characteristics | | | | | | | Evaluation results | | |
|---|---|---|---|---|---|---|---|---|---|---|
| | Thickness (μm) | Hot-water heat shrinkage rate at 90°C (%) | | Arithmetical mean height Sa (μm) | Maximum peak height Sp (μm) | Degassing time (second) | Haze (%) | Shrinkage finishing properties (*) | Wrinkles on film roll | Printability |
| | | Width direction | Longitudinal direction | | | | | | | |
| Example 1 | 30 | 72 | 4 | 0.032 | 1.45 | 10 | 3 | Good | Fair | Good |
| Example 2 | 30 | 72 | 4 | 0.059 | 1.91 | 7 | 3.5 | Good | Good | Good |
| Example 3 | 30 | 72 | 4 | 0.088 | 2.35 | 6 | 4.1 | Good | Good | Good |
| Example 4 | 30 | 72 | 4 | 0.124 | 2.63 | 4 | 4.6 | Good | Good | Fair |
| Example 5 | 30 | 72 | 4 | 0.165 | 2.91 | 2 | 5.2 | Good | Good | Fair |
| Example 6 | 30 | 72 | 4 | 0.033 | 1.47 | 10 | 6 | Good | Fair | Good |
| Example 7 | 30 | 75 | 1 | 0.03 | 1.41 | 10.5 | 9 | Good | Fair | Good |
| Example 8 | 30 | 73 | 3 | 0.03 | 1.41 | 10.5 | 3.2 | Good | Fair | Good |
| Example 9 | 30 | 65 | 3 | 0.041 | 1.2 | 12 | 4 | Good | Good | Good |
| Comparative Example 1 | 30 | 72 | 4 | 0.02 | 0.7 | 19 | 1.9 | Good | Bad | Good |
| Comparative Example 2 | 30 | 72 | 4 | 0.028 | 1 | 15 | 2.2 | Good | Bad | Good |
| Comparative Example 3 | 30 | 72 | 4 | 0.206 | 3.5 | 1 | 6 | Good | Good | Bad |
| Comparative Example 4 | 30 | 61 | 3 | 0.033 | 0.78 | 17 | 3.7 | Good | Bad | Good |
| Comparative Example 5 | 30 | 68 | 3 | 0.024 | 0.79 | 17 | 3.8 | Good | Bad | Good |

(*) The labels evaluated as level 3 or higher in shrinkage finishing properties are represented as 'Good'.

## INDUSTRIAL APPLICABILITY

The heat-shrinkable polyester film of the present invention has high heat shrinkage rate, high transparency and printability, and reduced degassing time, thereby enabling the production of a film roll with excellent appearance.

## EXPLANATION OF LETTERS OR NUMERALS

1: Base platform
2, 8: Film holddown
2a: Opening
3: Screw
4, 5: Film
6: Vacuum pump
7: Pipe
X: Overlapped portion of films

## Claims

**1.** A heat-shrinkable polyester film **characterized by** satisfying the following requirements (1) to (5):

(1) a hot-water heat shrinkage rate in a width direction of the film is 40% or more and 80% or less by immersing the film in hot-water at 90°C for 10 seconds,
(2) a hot-water heat shrinkage rate in a longitudinal direction of the film is -5% or more and 10% or less by immersing the film in hot-water at 90°C for 10 seconds,
(3) a maximum peak height Sp on at least one surface of the film is 0.8 μm or more and 3.0 μm or less,
(4) an arithmetical mean height Sa on at least one surface of the film is 0.03 μm or more and 0.2 μm or less, and
(5) a degassing time for removing air from between the two identical polyester films is 14 seconds or less, wherein the films are formed by stacking a front surface of the one film on a back surface of the other film.

**2.** The heat-shrinkable polyester film according to claim 1, wherein a thickness of the film is 15 μm or more and 50 μm or less.

**3.** The heat-shrinkable polyester film according to claim 1 or 2, wherein a haze at a film thickness of 30 μm is 2% or more and 11% or less.

**4.** The heat-shrinkable polyester film according to any one of claims 1 to 3, wherein the heat-shrinkable polyester film is a laminated heat-shrinkable polyester film comprising at least two or more laminated layers.

**5.** A heat-shrinkable label, comprising the heat-shrinkable polyester film according to any one of claims 1 to 4.

**6.** A package product, **characterized in that** the package product is produced by covering at least a part of periphery of an object for packaging with the heat-shrinkable label according to claim 5, and then shrinking the heat-shrinkable label by heat.

[Fig. 1]

3
8
2a
2d
5
A
2
3
8
2
2
4
B
X
1
2a
1
2c
7
6

**INTERNATIONAL SEARCH REPORT**

International application No.
**PCT/JP2021/034742**

**A. CLASSIFICATION OF SUBJECT MATTER**

***B32B 27/36***(2006.01)i; ***B65D 25/20***(2006.01)i; ***G09F 3/04***(2006.01)i; ***C08J 5/18***(2006.01)i
FI: C08J5/18 CFD; B32B27/36; G09F3/04 C; B65D25/20 Q

According to International Patent Classification (IPC) or to both national classification and IPC

**B. FIELDS SEARCHED**

Minimum documentation searched (classification system followed by classification symbols)

B32B1/00 - 43/00, C08K3/00 - 13/08, C08L1/00 - 101/14, C08J5/00 - 5/02, C08J5/12 - 5/22, B65D23/00 - 25/56, G09F1/00 - 5/04

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2019-199570 A (TOYOBO CO., LTD.) 21 November 2019 (2019-11-21) claims, paragraphs [0013], [0022], [0025], [0026], [0072], examples | 1-6 |
| A | JP 2015-180755 A (TOYOBO CO., LTD.) 15 October 2015 (2015-10-15) entire text | 1-6 |
| A | WO 2020/080051 A1 (TOYOBO CO., LTD.) 23 April 2020 (2020-04-23) entire text | 1-6 |
| A | JP 2015-147334 A (FUJIFILM CORP.) 20 August 2015 (2015-08-20) entire text | 1-6 |
| A | WO 2020/026972 A1 (TOYOBO CO., LTD.) 06 February 2020 (2020-02-06) entire text | 1-6 |
| A | JP 2020-104515 A (TOYOBO CO., LTD., TOYOBO STC. CO., LTD.) 09 July 2020 (2020-07-09) entire text | 1-6 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **01 December 2021** | **14 December 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | Telephone No. |

Form PCT/ISA/210 (second sheet) (January 2015)

INTERNATIONAL SEARCH REPORT

International application No.
PCT/JP2021/034742

C. DOCUMENTS CONSIDERED TO BE RELEVANT

| Category* | Citation of document, with indication, where appropriate, of the relevant passages | Relevant to claim No. |
|---|---|---|
| A | JP 01-299832 A (TEIJIN LTD.) 04 December 1989 (1989-12-04) entire text | 1-6 |
| A | WO 2020/071315 A1 (TOYOBO CO., LTD.) 09 April 2020 (2020-04-09) entire text | 1-6 |
| A | WO 2018/147249 A1 (TOYOBO CO., LTD.) 16 August 2018 (2018-08-16) entire text | 1-6 |
| A | JP 07-138458 A (MARUO CALCIUM CO., LTD.) 30 May 1995 (1995-05-30) entire text | 1-6 |
| A | JP 2010-284947 A (NITTO DENKO CORP.) 24 December 2010 (2010-12-24) entire text | 1-6 |
| A | JP 11-129373 A (TOYOBO CO., LTD.) 18 May 1999 (1999-05-18) entire text | 1-6 |
| A | JP 2014-098136 A (MITSUBISHI CHEMICALS CORP.) 29 May 2014 (2014-05-29) entire text | 1-6 |
| A | JP 2009-163195 A (TOYOBO CO., LTD.) 23 July 2009 (2009-07-23) entire text | 1-6 |
| A | WO 2017/018345 A1 (TOYOBO CO., LTD.) 02 February 2017 (2017-02-02) entire text | 1-6 |

Form PCT/ISA/210 (second sheet) (January 2015)

**INTERNATIONAL SEARCH REPORT**
**Information on patent family members**

International application No.
**PCT/JP2021/034742**

| Patent document cited in search report | Publication date (day/month/year) | Patent family member(s) | Publication date (day/month/year) |
|---|---|---|---|
| JP 2019-199570 A | 21 November 2019 | (Family: none) | |
| JP 2015-180755 A | 15 October 2015 | (Family: none) | |
| WO 2020/080051 A1 | 23 April 2020 | (Family: none) | |
| JP 2015-147334 A | 20 August 2015 | WO 2015/119164 A1<br>entire text<br>KR 10-2016-0101128 A<br>entire text<br>CN 105939851 A<br>entire text | |
| WO 2020/026972 A1 | 06 February 2020 | EP 3831864 A1<br>entire text<br>TW 202017966 A<br>entire text | |
| JP 2020-104515 A | 09 July 2020 | (Family: none) | |
| JP 01-299832 A | 04 December 1989 | (Family: none) | |
| WO 2020/071315 A1 | 09 April 2020 | (Family: none) | |
| WO 2018/147249 A1 | 16 August 2018 | US 2019/0375552 A1<br>entire text<br>EP 3581604 A1<br>entire text | |
| JP 07-138458 A | 30 May 1995 | (Family: none) | |
| JP 2010-284947 A | 24 December 2010 | (Family: none) | |
| JP 11-129373 A | 18 May 1999 | (Family: none) | |
| JP 2014-098136 A | 29 May 2014 | (Family: none) | |
| JP 2009-163195 A | 23 July 2009 | US 2010/0260951 A1<br>entire text<br>WO 2009/075312 A1<br>entire text<br>EP 2224418 A1<br>entire text | |
| WO 2017/018345 A1 | 02 February 2017 | US 2018/0208375 A1<br>entire text | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 5240387 B
- JP 2020117700 A